# EUROPEAN PATENT APPLICATION

(11) **EP 0 986 210 A2**
(43) Date of publication of application: **15.03.2000**
(21) Application number: 99304079.9
(22) Date of filing: 26.05.1999
(51) Int. Cl.: H04L 12/18

(54) **System and method for broadcasting computer network data**

(30) Priority: 10.06.1998 US 95488
(71) Applicant: LUCENT TECHNOLOGIES INC., Murray Hill, New Jersey 07974-0636 (US)
(72) Inventor: Ner, Haim Shalom, Fair Lawn, New Jersey 07410 (US); Rowland, Bruce Ramon, St. Charles, Illinois 60174 (US); Shah, Nitin Jayant, Scotch Plains, New Jersey 07076 (US)
(74) Representative: Johnston, Kenneth Graham

(57) **Abstract**

For use with a computer network having endpoints coupled thereto via telecommunications circuitry, a system for, and method of, broadcasting data contained in the computer network and a computer network incorporating the system or the method. In one embodiment, a data collector, coupled to the computer network, collects data stored in sites of the computer network. A wireless broadcast transmitter, coupled to the data collector, receives and broadcasts the data. Data storage equipment, ancillary to the telecommunications circuitry, receives and stores at least a portion of the data for use by ones of the endpoints.

## Description

### Technical Field of the Invention

The present invention is directed, in general, to computer networks and, more specifically, to a system and method for broadcasting computer network data and a computer network incorporating the system or the method.

### Background of the Invention

High traffic computer networks, such as the Internet, face increasing challenges to maintain fluid and seamless access for users that are increasing in both numbers and in their service expectations and data demands. The brunt of this situation must be met by the Internet service providers (ISPs) who actually provide the end user with Internet access. An ISP hub may be called upon to provide service to literally millions of people and must address trade-offs between the equipment capital expenditures that would be required to serve their total customer base in a seamless manner, and that level of equipment needed to serve some percentage of the total in an adequate manner.

At times of peak user demand, the congestion encountered in most conventional ISP networks is unacceptable to the majority of users who have come to expect unlimited Internet access time for a nominal, fixed monthly fee. Competition between ISPs continues to drive this monthly fee lower, thereby continually squeezing ISP profit margins and making improvements difficult at best. Another expense encountered by the ISP is the requirement for long distance phone service because users expect to gain access via local phone service. This causes ISPs to desire to spread this long distance service cost over as large a customer base as possible.

The use of mirror sites and other local data cache techniques decreases the user response time, but at the expense of data freshness and relevancy in some cases. Communication protocols used on the Internet and other computer networks tend to be high-overhead, from the standpoint of time, to obtain necessary data communication reliability. This, of course, adds to the problem of response in times of high user populations. Another problem for ISPs is that the user base is large and amorphous with a broad spectrum of interests and computer network data demands. This forces the ISP into the situation of having to be able to provide all of the available computer network data to each user even if a user may have only limited data interests.

Accordingly, what is needed in the art is a way to reduce computer network data transmission costs, provide data that is more current and up to date (*i.e.,* fresher) and reduce congestion that may be seen on many high demand computer networks (*e.g.,* the Internet).

### Summary of the Invention

To address the above-discussed deficiencies of the prior art, the present invention provides, for use with a computer network having endpoints coupled thereto via telecommunications circuitry, a system for, and method of, broadcasting data contained in the computer network and a computer network incorporating the system or the method. In one embodiment, a data collector, coupled to the computer network, collects data stored in sites of the computer network. A wireless broadcast transmitter, coupled to the data collector, receives and broadcasts the data. Data storage equipment, ancillary to the telecommunications circuitry, receives and stores at least a portion of the data for use by ones of the endpoints.

The present invention therefore introduces the concept of broadcasting at least selected portions of the data present in a computer network to data storage equipment that exists in the telecommunications circuitry outside the core of the network. The broadcast data are thereby cached and accessible without congesting the network with requests for such data.

In one embodiment of the present invention, the data storage equipment is ancillary to a selected one of: (1) a mobile switching center (MSC), (2) a base station controller (BSC) and (3) a central office switch. Those skilled in the art will perceive, however, that other locations within the telecommunications circuitry may provide an advantageous location for storing data from the computer network.

In one embodiment of the present invention, the telecommunications equipment communicates with ones of the endpoints according to one of the group consisting of: (1) Code Division Multiple Access (CDMA), (2) Time Division Multiple Access (TDMA), (3) Global System for Mobile Communications (GSM), (4) Cellular Digital Packet Data (CDPD) and (5) Local Multi-point Distribution Systems (LMDS). The present invention is not limited to a particular protocol or communications technique and may advantageously be employed with the emerging XWD standard.

In one embodiment of the present invention, the wireless broadcast transmitter employs Transmission Control Protocol/Internet Protocol (TCP/IP) to broadcast the data. This allows the data to be broadcast without reformatting. However, those skilled in the art should understand that broadcasting can employ any conventional or later-developed protocol.

In one embodiment of the present invention, the wireless broadcast transmitter is a satellite. Alternatively, land-based or airborne microwave relay stations can be employed to broadcast the data.

In one embodiment of the present invention, the data collector collects the data based on requests received from ones of the endpoints. Requests from a group of endpoints coupled to a particular BSC may therefore be gathered, prioritized and employed en masse to govern the nature of the data broadcast and stored. Alternatively, data selected by other means or all data can be broadcast and stored.

In one embodiment of the present invention, the computer network is the Internet. Of course, those skilled in the art will understand that the principles of the present invention can be employed to advantage with respect to any type of computer network.

The foregoing has outlined, rather broadly, preferred and alternative features of the present invention so that those skilled in the art may better understand the detailed description of the invention that follows. Additional features of the invention will be described hereinafter that form the subject of the claims of the invention. Those skilled in the art should appreciate that they can readily use the disclosed conception and specific embodiment as a basis for designing or modifying other structures for carrying out the same purposes of the present invention. Those skilled in the art should also realize that such equivalent constructions do not depart from the spirit and scope of the invention in its broadest form.

### Brief Description of the Drawings

For a more complete understanding of the present invention, reference is now made to the following descriptions taken in conjunction with the accompanying drawings, in which:
FIGURE 1 illustrates a system for broadcasting data contained in a computer network constructed according to the principles of the present invention;
FIGURE 2 illustrates a method of broadcasting data contained in a computer network constructed according to the principles of the present invention; and
FIGURE 3 illustrates a computer network that incorporates the system of FIGURE 1 or carries out the method of FIGURE 2.

### Detailed Description

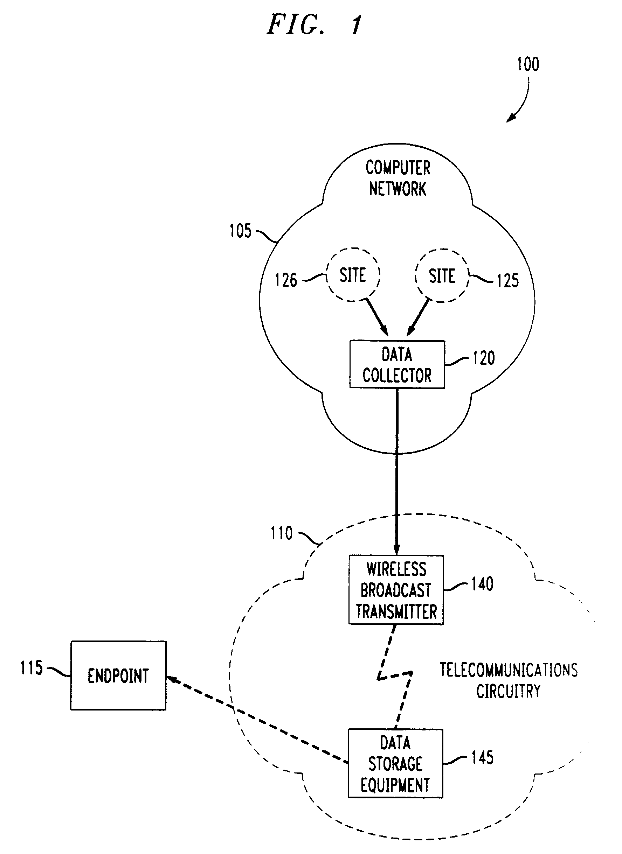

Referring initially to FIGURE 1, illustrated is a system 100 for broadcasting data contained in a computer network constructed according to the principles of the present invention. The system 100 includes a computer network 105, a telecommunications circuitry 110, an endpoint 115, first and second computer network sites 125, 126, a data collector 120, a wireless broadcast transmitter 140 and data storage equipment 145. The system 100 provides, for use with the computer network 105 having the endpoint 115 coupled to the telecommunications circuitry 110, a system for, and method of, broadcasting data contained in the computer network 105. The computer network 105 may be the Internet. Of course, those skilled in the art will understand that the principles of the present invention can be employed to advantage with respect to any type of computer network.

In this embodiment, the data collector 120 is coupled to the computer network 105 and collects data stored in the sites 125, 126 of the computer network 105. The wireless broadcast transmitter 140 is coupled to the data collector 120 and receives and broadcasts the data. The data storage equipment 145 which is ancillary to the telecommunications circuitry 110 receives and stores at least a portion of the data for use by the endpoint 115.

The present invention therefore introduces the concept of broadcasting at least selected portions of the data present in the computer network 105 to the data storage equipment 145 that exists in the telecommunications circuitry 110 outside the core of the network. The broadcast data are thereby cached and accessible without congesting the computer network 105 with requests for such data. This type of system may combine the global reach of the Internet with the wide area broadcast capability of digital satellite transmission. Also, a control structure may be used which is based on very localized use of the Internet in multiple geographic regions.

The data collector 120 collects the data based on requests received from the endpoint 115. Requests from a group of endpoints coupled to a particular BSC may therefore be gathered, prioritized and employed en masse to govern the nature of the data broadcast and stored. Alternatively, data selected by other means or all data can be broadcast and stored.

The wireless broadcast transmitter 140 may employ TCP/IP to broadcast the data. This allows the data to be broadcast without reformatting. However, those skilled in the art should understand that broadcasting can employ any conventional or later-developed protocol. The wireless broadcast transmitter 140 may also be a satellite, as mentioned earlier. Alternatively, land-based or airborne microwave relay stations can be employed to broadcast the data.

In this embodiment, the data storage equipment 145 is ancillary to a selected one of an MSC, a BSC and a central office switch. Those skilled in the art will perceive, however, that other locations within the telecommunications circuitry 110 may provide an advantageous location for storing data from the computer network 105.

The telecommunications equipment 110 communicates with the endpoint 115 according to one of the group consisting of CDMA, TDMA, GSM, CDPD and LMDS. The present invention is not limited to a particular protocol or communications technique, however, and may be employed to advantage with the emerging XWD standard.

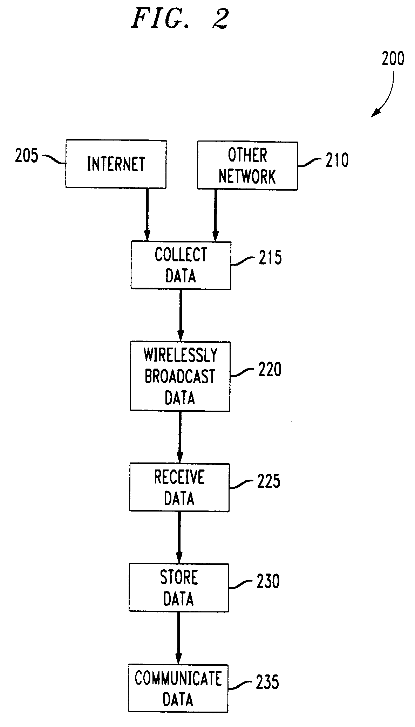

Turning now to FIGURE 2, illustrated is a method of broadcasting data contained in a computer network constructed according to the principles of the present invention. A flow diagram 200 depicts a method of broadcasting data contained in a computer network which has endpoints coupled via a telecommunications circuitry and comprises collecting the data stored in at least one of the sites of the computer network and wirelessly broadcasting this collected data. At least a portion of this broadcast data is then received and stored in data storage equipment ancillary to the telecommunications circuitry for use by the endpoints.

The flow diagram 200 shows that data are collected by COLLECT DATA (a block 215) from either INTERNET (a block 205) or from OTHER NETWORK (a block 210). INTERNET (the block 205) represents the data that resides on the Internet, and OTHER NETWORK (the block 210) represents data that may reside on all other networks, either public or private, to which the user may gain access. COLLECT DATA (the block 215) typically resides in the computer network 105 of FIGURE 1 and collects the data based on requests received from an endpoint. WIRELESSLY BROADCAST DATA (a block 220) receives the data from COLLECT DATA (the block 215) and wirelessly broadcasts it using a wireless broadcast transmitter. The wireless broadcast transmitter may be a satellite or broadcasting may comprise employing TCP/IP to broadcast the data.

Then, the data are received by RECEIVE DATA (a block 225) and stored by STORE DATA (a block 230). The data storage equipment may be ancillary to an MSC, a BSC, a central office switch or any other telecommunications equipment. Finally, COMMUNICATE DATA (a block 235) communicates the data to the requesting endpoint. This communication may be carried out according to one of: XWD, CDMA, TDMA, GSM, CDPD and LMDS.

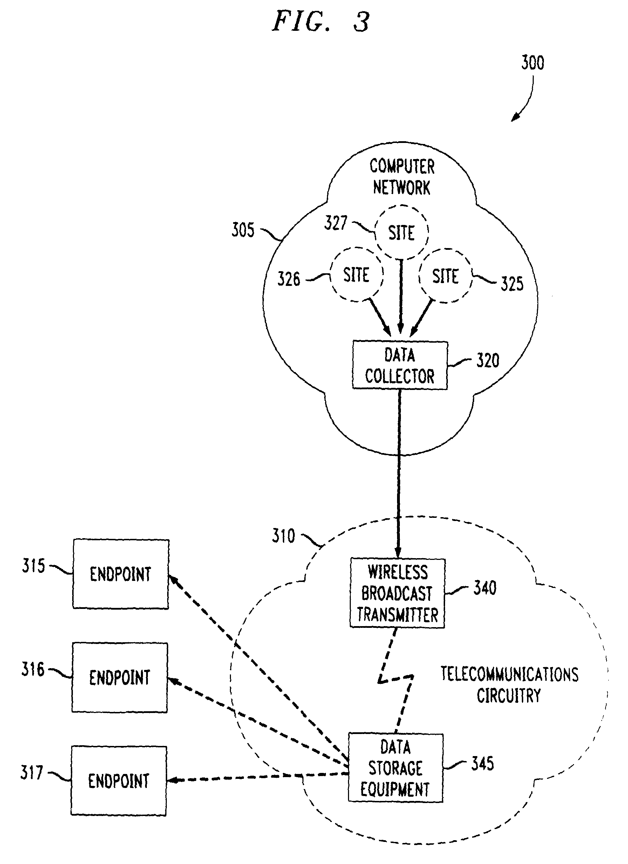

Turning now to FIGURE 3, illustrated is a computer network that incorporates the system of FIGURE 1 or carries out the method of FIGURE 2. FIGURE 3 illustrates a diagram 300 that shows a computer network 305 comprising a network core, wherein the network core may comprise the Internet, having a plurality of sites 325, 326, 327, and telecommunications circuitry 310 coupled to the network core. Further, a plurality of endpoints 315, 316, 317 couplable to the telecommunications circuitry 310 to allow communication of data between the network core and the plurality of endpoints 315, 316, 317 and a data collector 320 coupled to the network core, that collects data stored in the plurality of sites 325, 326, 327. Further still, a wireless broadcast transmitter 340 coupled to the data collector 320 that receives and broadcasts said data and a data storage equipment 345 ancillary to the telecommunications circuitry 310 that receives and stores at least a portion of the data for use by ones of the plurality of endpoints 315, 316, 317.

The data collector 320 collects data based on requests received from the endpoints 315, 316, 317. The wireless broadcast transmitter 340 may employ TCP/IP to broadcast the data, or the wireless broadcast transmitter may be a satellite. The data storage equipment 345 may be ancillary to a selected one of an MSC, a BSC and a central office switch. Again, the telecommunications equipment may communicate with ones of the plurality of endpoints 315, 316 317 according to one of the group consisting of XWD, CDMA, TDMA, GSM, CDPD and LMDS.

From the above, it is apparent that the present invention provides, for use with a computer network having endpoints coupled thereto via telecommunications circuitry, a system for, and method of, broadcasting data contained in the computer network and a computer network incorporating the system or the method. In one embodiment, a data collector, coupled to the computer network, collects data stored in sites of the computer network. A wireless broadcast transmitter, coupled to the data collector, receives and broadcasts the data. Data storage equipment, ancillary to the telecommunications circuitry, receives and stores at least a portion of the data for use by ones of the endpoints.

Although the present invention has been described in detail, those skilled in the art should understand that they can make various changes, substitutions and alterations herein without departing from the spirit and scope of the invention in its broadest form.

## Claims

1. For use with a computer network having endpoints coupled thereto via telecommunications circuitry, a system for broadcasting data contained in said computer network, comprising:
a data collector, coupled to said computer network, that collects data stored in sites of said computer network;
a wireless broadcast transmitter, coupled to said data collector, that receives and broadcasts said data; and
data storage equipment, ancillary to said telecommunications circuitry, that receives and stores at least a portion of said data for use by ones of said endpoints.

2. For use with a computer network having endpoints coupled thereto via telecommunications equipment, a method of broadcasting data contained in said computer network, comprising:
collecting data stored in sites of said computer network;
wirelessly broadcasting said data; and
receiving and storing said at least a portion of said data in data storage equipment ancillary to said telecommunications equipment for use by ones of said endpoints.

3. A computer network comprising:
a network core having a plurality of sites;
telecommunications circuitry coupled to said network core;
a plurality of endpoints couplable to said telecommunications circuitry to allow communication of data between said network core and said plurality of endpoints;
a data collector, coupled to said network core, that collects data stored in said plurality of sites;
a wireless broadcast transmitter, coupled to said data collector, that receives and broadcasts said data; and
data storage equipment, ancillary to said telecommunications circuitry, that receives and stores at least a portion of said data for use by ones of said plurality of endpoints.

4. The system of claim 1, or the method of claim 2, or the network of claim 3, wherein said data storage equipment is ancillary to a selected one of:
a mobile switching center (MSC),
a base station controller (BSC), and
a central office switch.

5. The system of claim 1, or the method of claim 2, or the network of claim 3, wherein the telecommunications equipment communicates with ones of said endpoints according to one of the group consisting of:
Code Division Multiple Access (CDMA),
Time Division Multiple Access (TDMA),
Global System for Mobile Communications (GSM),
Cellular Digital Packet Data (CDPD), and
Local Multi-point Distribution Systems (LMDS).

6. The system of claim 1, or the method of claim 2, or the network of claim 3, wherein the broadcasting employs Transmission Control Protocol/Internet Protocol (TCP/IP) to broadcast said data.

7. The system of claim 1, or the method of claim 2, or the network of claim 3, wherein said wireless broadcast transmitter is a satellite.

8. The system of claim 1, or the method of claim 2, or the network of claim 3, wherein said data collector collects said data based on requests received from ones of said endpoints.

9. The system of claim 1, or the method of claim 2, or the network of claim 3, wherein said computer network is the Internet.
